# EUROPEAN PATENT APPLICATION

(11) **EP 3 991 966 A1**
(43) Date of publication of application: **04.05.2022**
(21) Application number: 20830604.3
(22) Date of filing: 26.06.2020
(51) Int. Cl.: B32B 27/08, B65D 65/40, B32B 7/022

(54) **MULTILAYER FILM AND PACKAGE**

(30) Priority: 27.06.2019 JP 2019119602
(71) Applicant: Sumitomo Bakelite Co.Ltd., Shinagawa-ku Tokyo 140-0002 (JP)
(72) Inventor: OKU Shintaro, Tokyo 140-0002 (JP)
(74) Representative: Ter Meer Steinmeister & Partner
(86) International application number: PCT/JP2020/025392
(87) International publication number: WO 2020/262675

(57) **Abstract**

Provided is a multilayer film, in which in a case where a molding test for forming, by thermal molding, solid accommodation part having a recessed shape that opens on one surface of the multilayer film and protrudes on the other surface is carried out multiple times with respect to the multilayer film under a uniform molding pressure and at various molding temperatures, a difference between the molding temperatures that differ from each other is 10°C or higher, in which the molding temperatures enables a ratio of a depth to an inner diameter of the solid accommodation part to be 0.37 to 0.43, and enables the multilayer film of the solid accommodation part to have a thickness of 20% to 100% with respect to a thickness before the thermal molding, and a difference between a maximum temperature value and a minimum temperature value of the multilayer film in a case where a storage elastic modulus of the multilayer film is 5.0 × 10⁶ to 5.0 × 10⁷ Pa is 25°C to 140°C.

## Description

### Technical Field

The present invention relates to a multilayer film and a package.

Priority is claimed on Japanese Patent Application No. 2019-119602, filed on June 27, 2019, the content of which is incorporated herein by reference.

### Background Art

It is common that foods, pharmaceutical products, and the like are packaged, at the time of sale, with packages such as packaging bags and packaging containers. For such packages, various performances are required for protection of the contents, and the like. Therefore, in some of the packages, a multilayer film that is prepared by compositization (multilayering) has been used.

The multilayer film used in packages is required to have impact resistance and gas barrier properties in order to impart functions such as protection of the content to the package. For example, in Patent Literature 1, as means for improving the impact resistance and gas barrier properties, a method of orienting crystals in a multilayer film by stretching the multilayer film which is formed of a polymer material is disclosed.

### Citation List

### Patent Literature

[PTL 1] Japanese Unexamined Patent Application, First Publication No. 2007-283569

### Summary of Invention

### Technical Problem

However, since a crystalline film is included in the multilayer film disclosed in Patent Literature 1, there has been a problem that the multilayer film is excellent in gas barrier properties, but the molding processability of the entire film deteriorates.

The present invention has been made in view of the above circumstances, and an object is to provide a multilayer film having improved molding processability and a package using this multilayer film.

### Solution to Problem

In order to solve the above problems, the present invention employs the following configurations.
[1] A multilayer film, in which in a case where a molding test for forming, by thermal molding, solid accommodation part having a recessed shape that opens on one surface of the multilayer film and protrudes on the other surface is carried out multiple times with respect to the multilayer film under a uniform molding pressure and at various molding temperatures, a difference between the molding temperatures that differ from each other is 10°C or higher, in which the molding temperatures enables a ratio of a depth to an inner diameter of the solid accommodation part to be 0.37 to 0.43, and enables the multilayer film of the solid accommodation part to have a thickness of 20% to 100% with respect to a thickness before the thermal molding, and a difference between a maximum temperature value and a minimum temperature value of the multilayer film in a case where a storage elastic modulus of the multilayer film is 5.0 × 10⁶ to 5.0 × 10⁷ Pa is 25°C to 140°C.
[2] A multilayer film, wherein a difference between a maximum temperature value and a minimum temperature value of the multilayer film in a case where a storage elastic modulus of the multilayer film is 1.5 × 10⁷ to 3.5 × 10⁷ Pa is 10°C to 80°C.
[3] The multilayer film according to [1], in which in a case where the molding test is carried out multiple times with respect to the multilayer film under a uniform molding pressure and at various molding temperatures, a difference between the molding temperatures that differ from each other is 8°C or higher, in which the molding temperatures enables a ratio of a depth to an inner diameter of the solid accommodation part to be 0.47 to 0.53, and enables the multilayer film of the solid accommodation part to have a thickness of 20% to 100% with respect to a thickness before the thermal molding.
[4] The multilayer film according to any one of [1] to [3], in which the multilayer film includes a base material layer or an outer layer, and a barrier layer.
[5] The multilayer film according to [4], in which the barrier layer contains an amorphous resin or a low-density polyethylene resin.
[6] The multilayer film according to [4] or [5], in which the base material layer or the outer layer contains an amorphous resin.
[7] The multilayer film according to any one of [4] to [6], in which the barrier layer contains a plant-derived crystalline resin.
[8] The multilayer film according to any one of [1] to [3], in which the multilayer film includes a barrier layer in which a first film layer containing a first resin, and a second film layer containing a second resin different from the first resin are alternately and repeatedly laminated.
[9] The multilayer film according to [8], in which a total thickness of the first film layer is 10 to 500 µm, and a total thickness of the second film layer is 10 to 500 µm.
[10] The multilayer film according to [8] or [9], in which a lamination number of the first film layer in the barrier layer is in a range of 50 to 5000.
[11] The multilayer film according to any one of [8] to [10], in which the first resin is a cyclic olefin-based resin, and the second resin is an elastomer.
[12] The multilayer film according to [11], in which the elastomer is a styrene-based elastomer.
[13] The multilayer film according to any one of [8] to [12], in which the multilayer film further includes a pair of outer layers with the barrier layer interposed therebetween.
[14] A multilayer film including a barrier layer in which a first film layer containing a first resin and a second film layer containing a second resin different from the first resin are alternately and repeatedly laminated,
   in which the first resin is a cyclic olefin-based resin, and the second resin is an elastomer.
[15] The multilayer film according to [14], in which a total thickness of the first film layer is 10 to 500 µm, and a total thickness of the second film layer is 10 to 500 µm.
[16] A package including the multilayer film according to any one of [1] to [15].

### Advantageous Effects of Invention

In a multilayer film of the present invention, in a case where a molding test for forming, by thermal molding, solid accommodation part having a recessed shape that opens on one surface of the multilayer film and protrudes on the other surface is carried out multiple times with respect to the multilayer film under a uniform molding pressure and at various molding temperatures, a difference between the molding temperatures that differ from each other is 10°C or higher, in which the molding temperatures enables a ratio ([depth of solid accommodation part]/[inner diameter of solid accommodation part], hereinbelow, referred to as a drawing ratio) of a depth to an inner diameter of the solid accommodation part to be 0.37 to 0.43, and enables the multilayer film of the solid accommodation part to have a thickness of 20% to 100% with respect to a thickness before the thermal molding, and a difference between a maximum temperature value and a minimum temperature value of the multilayer film in a case where a storage elastic modulus of the multilayer film is 5.0 × 10⁶ to 5.0 × 10⁷ Pa is 25°C to 140°C, so that the entire film is excellent in molding processability.

In a multilayer film of the present invention, a difference between a maximum temperature value and a minimum temperature value of the multilayer film in a case where a storage elastic modulus of the multilayer film is 1.5 × 10⁷ to 3.5 × 10⁷ Pa is 10°C to 80°C, so that the entire film is excellent in molding processability.

Since the multilayer film of the present invention is excellent in molding processability and has a wide temperature range (molding temperature range) that enables the multilayer film to be molded into a package, the package of the present invention can be continuously and stably produced, and easy to support deep drawing.

### Brief Description of Drawings

FIG. 1 is a cross-sectional diagram schematically illustrating an embodiment of a multilayer film of the present invention.
FIG. 2 is a cross-sectional diagram schematically illustrating an embodiment of the multilayer film of the present invention.
FIG. 3 is a perspective diagram schematically illustrating an embodiment of a package of the present invention.
FIG. 4 is a cross-sectional diagram taken along line I-I of the package illustrated in FIG. 3.
FIG. 5 is a graph illustrating a correlation between a molding temperature range in a case where a drawing ratio is 0.4 and a temperature range in which a storage elastic modulus is 5 to 50 MPa.
FIG. 6 is a graph illustrating a correlation between a molding temperature range in a case where a drawing ratio is 0.5 and a temperature range in which a storage elastic modulus is 5 to 50 MPa.

### Description of Embodiments

Hereinafter, a multilayer film that is an embodiment according to the present invention, and a package using this multilayer film will be described in detail. The drawings used in the following description may illustrate an enlarged diagram of a featured portion for convenience, for easy understanding of the features, and the dimensional ratios and the like of various constituent elements are not restricted to be the same as the actual ratios and the like.

### «Multilayer Film»

### First Embodiment

First, properties of a multilayer film of a first embodiment will be described.

In the multilayer film of the first embodiment according to the present invention, in a case where a molding test for forming, by thermal molding, solid accommodation part having a recessed shape that opens on one surface of the multilayer film and protrudes on the other surface is carried out multiple times with respect to the multilayer film under a uniform molding pressure and at various molding temperatures, a difference between the molding temperatures that differ from each other is 10°C or higher, in which the molding temperatures enables a drawing ratio of the solid accommodation part to be 0.37 to 0.43, and enables the multilayer film of the solid accommodation part to have a thickness of 20% to 100% with respect to a thickness before the thermal molding, and a difference between a maximum temperature value and a minimum temperature value of the multilayer film in a case where a storage elastic modulus of the multilayer film is 5.0 × 10⁶ to 5.0 × 10⁷ Pa is 25°C to 140°C. That is, the multilayer film of the present embodiment has a wide molding temperature range and is excellent in molding processability.

In a case where the above-mentioned molding test is carried out multiple times under a uniform molding pressure and at various molding temperatures, a difference between the above-mentioned molding temperatures that differ from each other is 10°C or higher, for example, may be any of 15°C or higher and 20°C or higher, in which the molding temperatures enables a drawing ratio of the solid accommodation part to be 0.37 to 0.43, and enables the multilayer film of the solid accommodation part to have a thickness of 20% to 100% with respect to a thickness before the thermal molding. The upper limit value of the difference between the molding temperatures is not particularly limited, but may be, for example, 100°C or lower, 50°C or lower, or 40°C or lower.

In the multilayer film of the present embodiment, in a case where the molding test is carried out multiple times under a uniform molding pressure and at various molding temperatures, a difference between the molding temperatures that differ from each other is 10°C or higher, in which the molding temperatures enables a drawing ratio of the solid accommodation part to be 0.37 to 0.43, and enables the multilayer film of the solid accommodation part to have a thickness of 20% to 100% with respect to a thickness before the thermal molding. Therefore, the multilayer film can be molded at a wide temperature range.

In the molding test, a molding pressure is preferably 0.1 to 0.5 MPa, and more preferably 0.2 to 0.4 MPa. The molding temperature is preferably 80°C to 160°C, and more preferably 90°C to 150°C.

Examples of the multilayer film of the present embodiment include a multilayer film that enables the thickness of the above-mentioned multilayer film in the solid accommodation part to be any of 20% to 100%, 30% to 100%, 40% to 100%, 50% to 100%, 60% to 100%, or 70% to 100% with respect to the thickness before the thermal molding in a case where as a result of carrying out the molding test, the drawing ratio of the solid accommodation part is 0.37 to 0.43, and the difference between the molding temperatures is 10°C or higher.

Examples of the multilayer film of the present embodiment include a multilayer film that enables the drawing ratio of the solid accommodation part to be any of 0.37 to 0.42, 0.37 to 0.41, 0.37 to 0.43, 0.38 to 0.43, 0.39 to 0.43, 0.38 to 0.42, or 0.39 to 0.41 in a case where as a result of carrying out the molding test, the thickness of the multilayer film in the solid accommodation part is 20% to 100% with respect to the thickness before the thermal molding, and the difference between the molding temperatures is 10°C or higher. An inner diameter of the solid accommodation part is not particularly limited as long as the drawing ratio of the solid accommodation part is within any of the above-mentioned numerical ranges, but is preferably 5 to 15 mm, more preferably 7 to 13 mm, and particularly preferably 10 mm.

Preferred examples of the multilayer film of the present embodiment include a multilayer film that has both the thickness of the multilayer film in the solid accommodation part and the drawing ratio of the solid accommodation part of which values are within any of the above-mentioned numerical ranges in a case where as a result of carrying out the molding test, the difference between the molding temperatures is 10°C or higher.

In the preferred multilayer film of the present embodiment, in a case where the molding test is carried out multiple times under a uniform molding pressure and at various molding temperatures, the difference between the molding temperatures that differ from each other is 8°C or higher, in which the molding temperatures enables the drawing ratio of the solid accommodation part to be 0.47 to 0.53, and enables the multilayer film of the solid accommodation part to have a thickness of 20% to 100% with respect to a thickness before the thermal molding.

In a case where the above-mentioned molding test is carried out multiple times under a uniform molding pressure and at various molding temperatures, a difference between the above-mentioned molding temperatures that differ from each other is 8°C or higher, for example, may be any of 10°C or higher and 15°C or higher, in which the molding temperatures enables a drawing ratio of the solid accommodation part to be 0.47 to 0.53, and enables the multilayer film of the solid accommodation part to have a thickness of 20% to 100% with respect to a thickness before the thermal molding. The upper limit value of the difference between the molding temperatures is not particularly limited, but may be, for example, 100°C or lower, 50°C or lower, or 40°C or lower.

In the multilayer film of the present embodiment, in a case where the molding test is carried out multiple times under a uniform molding pressure and at various molding temperatures, a difference between the molding temperatures that differ from each other is 8°C or higher, in which the molding temperatures enables a drawing ratio of the solid accommodation part to be 0.47 to 0.53, and enables the multilayer film of the solid accommodation part to have a thickness of 20% to 100% with respect to a thickness before the thermal molding. Therefore, the multilayer film can be molded at a wide temperature range.

The multilayer film of the present embodiment is preferably a multilayer film that enables the thickness of the above-mentioned multilayer film in the solid accommodation part to be any of 20% to 100%, 30% to 100%, 40% to 100%, 50% to 100%, 60% to 100%, or 70% to 100% with respect to the thickness before the thermal molding in a case where as a result of carrying out the molding test, the drawing ratio of the solid accommodation part is 0.47 to 0.53, and the difference between the molding temperatures is 8°C or higher.

Examples of the multilayer film of the present embodiment include a multilayer film that enables the drawing ratio of the solid accommodation part to be any of 0.47 to 0.53, 0.47 to 0.51, 0.48 to 0.53, 0.48 to 0.51, 0.49 to 0.53, 0.49 to 0.52, or 0.49 to 0.51 in a case where as a result of carrying out the molding test, the thickness of the multilayer film in the solid accommodation part is 20% to 100% with respect to the thickness before the thermal molding, and the difference between the molding temperatures is 8°C or higher. An inner diameter of the solid accommodation part is not particularly limited as long as the drawing ratio of the solid accommodation part is within any of the above-mentioned numerical ranges, but is preferably 5 to 15 mm, more preferably 7 to 13 mm, and particularly preferably 10 mm.

Preferred examples of the multilayer film of the present embodiment include a multilayer film that has both the thickness of the multilayer film in the solid accommodation part and the drawing ratio of the solid accommodation part of which values are within any of the above-mentioned numerical ranges in a case where as a result of carrying out the molding test, the difference between the molding temperatures is 8°C or higher.

The difference between a maximum temperature value and a minimum temperature value of the multilayer film in a case where the storage elastic modulus is 5.0 × 10⁶ to 5.0 × 10⁷ Pa can be obtained by measuring a storage elastic modulus of the multilayer film of the present embodiment with a known method as in, for example, the case of the embodiment described later to measure temperatures in which the storage elastic modulus is within the above range.

The difference between a maximum temperature value and a minimum temperature value of the multilayer film in a case where the storage elastic modulus is 5.0 × 10⁶ to 5.0 × 10⁷ Pa is 25°C to 140°C, preferably 25°C to 130°C, more preferably 25°C to 120°C, even more preferably 30°C to 110°C, and particularly preferably 30°C to 100°C, and for example, may be any of 50°C to 140°C, 50°C to 130°C, 40°C to 140°C, 40°C to 130°C, 40°C to 120°C, 40°C to 110°C, 40°C to 100°C, 30°C to 140°C, 30°C to 130°C, 30°C to 120°C, 25°C to 110°C, 25°C to 100°C, 50°C to 120°C, 50°C to 110°C, 60°C to 140°C, or 70°C to 140°C. By setting the difference between a maximum temperature value and a minimum temperature value of the multilayer film in a case where the storage elastic modulus of the sheet is 5.0 × 10⁶ to 5.0 × 10⁷ Pa to 25°C to 140°C, the wide temperature range in which the storage elastic modulus is suitable for molding is obtained. Therefore, it is easier to perform the molding of the multilayer film.

In the multilayer film of the present embodiment, the difference between a maximum temperature value and a minimum temperature value of the multilayer film in a case where the storage elastic modulus is 1.5 × 10⁷ to 3.5 × 10⁷ Pa is preferably 10°C to 80°C. By setting the difference between a maximum temperature value and a minimum temperature value of the multilayer film to 10°C to 80°C, the wide temperature range in which the storage elastic modulus is suitable for molding is obtained. Therefore, it is easier to perform the molding of the multilayer film.

The difference between a maximum temperature value and a minimum temperature value of the multilayer film in a case where the storage elastic modulus is 1.5 × 10⁷ to 3.5 × 10⁷ Pa is preferably 10°C to 80°C, more preferably 10°C to 70°C, even more preferably 10°C to 60°C, and particularly preferably 10°C to 50°C, and for example, may be any of 12°C to 80°C, 12°C to 70°C, 12°C to 60°C, 12°C to 50°C, 15°C to 80°C, 15°C to 70°C, 15°C to 60°C, 15°C to 50°C, 20°C to 80°C, 20°C to 70°C, 20°C to 60°C, 20°C to 50°C, 30°C to 80°C, 30°C to 70°C, 30°C to 60°C, or 40°C to 50°C.

### Second Embodiment

Next, properties of a multilayer film of a second embodiment will be described.

In the multilayer film of the second embodiment according to the present invention, the difference between a maximum temperature value and a minimum temperature value of the multilayer film in a case where the storage elastic modulus is 1.5 × 10⁷ to 3.5 × 10⁷ Pa is 10°C to 80°C. By setting the difference between a maximum temperature value and a minimum temperature value of the multilayer film to 10°C to 80°C, the wide temperature range in which the storage elastic modulus is suitable for molding is obtained. Therefore, it is easier to perform the molding of the multilayer film.

The difference between a maximum temperature value and a minimum temperature value of the multilayer film in a case where the storage elastic modulus is 1.5 × 10⁷ to 3.5 × 10⁷ Pa is 10°C to 80°C, preferably 10°C to 70°C, more preferably 10°C to 60°C, and particularly preferably 10°C to 50°C, and for example, may be any of 12°C to 80°C, 12°C to 70°C, 12°C to 60°C, 12°C to 50°C, 15°C to 80°C, 15°C to 70°C, 15°C to 60°C, 15°C to 50°C, 20°C to 80°C, 20°C to 70°C, 20°C to 60°C, 20°C to 50°C, 30°C to 80°C, 30°C to 70°C, 30°C to 60°C, or 40°C to 50°C.

The multilayer film of the second embodiment may have the properties of the multilayer film of the first embodiment in a case where the molding test is performed.

Subsequently, configurations of the multilayer films of the first embodiment and the second embodiment will be described.

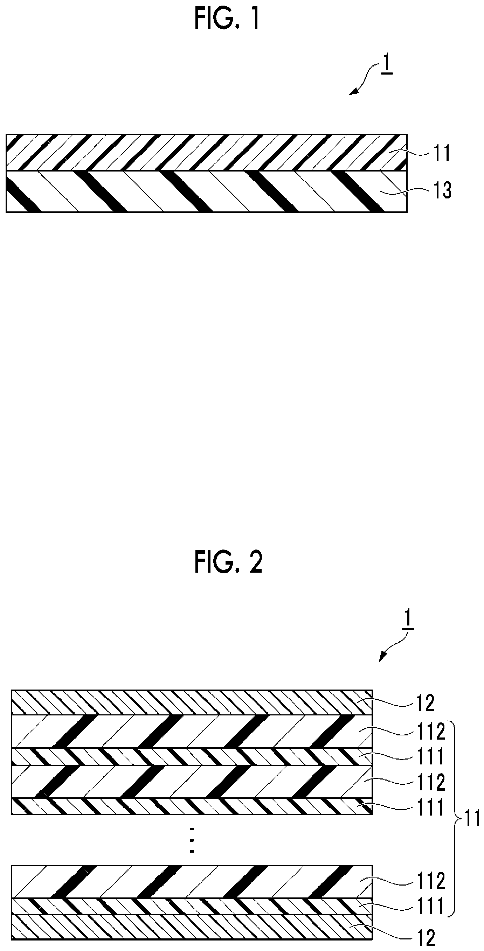

FIG. 1 is a schematic cross-sectional diagram of a multilayer film of the present embodiment. As illustrated in FIG. 1, a multilayer film 1 of the present embodiment includes a barrier layer 11 and may further include a base material layer 13. As the entire film, molding processability of the multilayer film 1 is improved.

### <Base Material Layer>

The base material layer 13 preferably contains polyvinyl chloride. Since the base material layer 13 contains polyvinyl chloride, the molding processability of the multilayer film 1 can be further improved.

The base material layer 13 may contain a resin other than polyvinyl chloride, an additive, or the like. These may be used singly or two or more thereof may be used in combination.

Examples of the resin other than the above-mentioned polyvinyl chloride include polypropylene, polyethylene, and the like.

As the additives, examples include antioxidants, antistatic agents, crystal nucleating agents, inorganic particles, organic particles, viscosity-reducing agents, thickeners, heat stabilizers, lubricants, infrared absorbers, and ultraviolet absorbers.

The content of the polyvinyl chloride in the base material layer 13 is preferably in the range of 70% to 100% by mass, more preferably in the range of 80% to 100% by mass, and even more preferably in the range of 90% to 100% by mass.

Since the content of the polyvinyl chloride in the base material layer 13 is in the above-mentioned range, the molding processability of the multilayer film 1 can be further improved.

### <Barrier Layer>

The multilayer film 1 of the present embodiment includes the barrier layer 11. The barrier layer 11 imparts excellent gas barrier properties and molding processability to the multilayer film 1.

The barrier layer 11 may contain an amorphous resin. Since the amorphous resin is included, molding processability can be ensured. The amorphous resin may be a plant-derived amorphous resin, or may be a resin obtained by combining a plant-derived amorphous resin with a petroleum-derived amorphous resin. Specific examples thereof include cyclic olefin-based resins, olefin-based elastomers, polyvinyl chlorides, polystyrenes, styrene-based elastomers, polymethyl methacrylates, polycarbonates, glycol-modified polyethylene terephthalates, and the like. In the barrier layer 11, one kind of these amorphous resins can be used singly, or two or more kinds thereof can be used in combination.

Among these, cyclic olefin-based resins are preferably used in the barrier layer 11. Since the cyclic olefin-based resins are excellent in moisture resistance, transparency, and molding processability as compared with other materials, it is possible to impart high molding processability to the multilayer film.

Here, examples of the cyclic olefin-based resins include a homopolymer of various cyclic olefin monomers (cycloolefin polymer (COP)); a copolymer of a cyclic olefin monomer and another monomer (cycloolefin copolymer (COC)) such as ethylene; a hydrogen additive of a homopolymer or a copolymer thereof.

Specific examples of the cyclic olefin monomer include bicyclic cycloolefins such as norbornene, norbornadiene, methylnorbornene, dimethylnorbornene, ethylnorbornene, chlorinated norbornene, chloromethylnorbornene, trimethylsilylnorbornene, phenylnorbornene, cyanonorbornene, dicyanonorbornene, methoxycarbonylnorbornene, pyridylnorbornene, nadic acid anhydride, and nadic acid imide; tricyclic cycloolefins such as dicyclopentadiene, dihydrodicyclopentadiene and alkyl, alkenyl, alkylidene, and an aryl substituent thereof; tetracyclic cycloolefins such as dimethanohexahydronaphthalene, dimethanooctahydronaphthalene and alkyl, alkenyl, alkylidene, and an aryl substituent thereof; five-ring cycloolefins such as tricyclopentadiene; six-ring cycloolefins such as hexacycloheptadecene; and the like. In addition, examples thereof include dinorbornene, a compound in which two norbornene rings are bonded with a hydrocarbon chain or an ester group, and a compound containing a norbornene ring such as an alkyl or aryl substituent thereof.

A polymerization method and polymerization mechanism of monomers of the cyclic olefin-based resins may employ ring-opening polymerization or addition polymerization. In addition, in a case where a plurality of types of monomers are used in combination, a polymerization mode may be random copolymerization or block copolymerization.

The barrier layer 11 may contain a crystalline resin. The crystalline resin may be a plant-derived crystalline resin, or may be a resin obtained by combining a plant-derived crystalline resin with a petroleum-derived crystalline resin.

The plant-derived crystalline resin is not particularly limited as long as a resin is a plant-derived and crystalline thermoplastic resin, and specific examples thereof include plant-derived polyolefin-based resins and polyester-based resins. Specific examples of the plant-derived polyolefin-based resins include a plant-derived polyethylene resin such as a plant-derived high-density polyethylene resin (HDPE resin), a plant-derived low-density polyethylene resin (LDPE resin), and a plant-derived linear low-density polyethylene resin (L-LDPE resin). Specific examples of the plant-derived polyester-based resins include a plant-derived polyethylene terephthalate resin, a plant-derived polybutylene terephthalate resin, a plant-derived polytrimethylene terephthalate resin, a polybutylene succinate resin, and the like. One kind of these can be used singly, or two or more kinds thereof may be used in combination. Among these, from the viewpoint of ensuring molding processability, it is preferable to contain a plant-derived low-density polyethylene resin (LDPE resin).

In addition, the petroleum-derived crystalline resin is not particularly limited as long as the resin is a petroleum-derived and crystalline thermoplastic resin, and specific examples include olefin-based resins such as a polyethylene resin, a polypropylene resin, and a polymethylpentene resin, polyamide-based resins such as a nylon 6 resin and a nylon 66 resin, polyester-based resins such as a polyethylene terephthalate resin, a polybutylene terephthalate resin, a polybutylene succinate resin, and a polyethylene-2,6-naphthalate resin, polyacetal resins, polylactic acid resins, polyglycolic acid resins, polycaprolactone resins, and copolymer resins containing monomers that form the above-mentioned resins. One kind of these can be used singly, or two or more kinds thereof may be used in combination.

The barrier layer 11 may contain a resin containing a halogen atom such as polyvinyl chloride, polyvinylidene chloride, or polychlorotrifluoroethylene.

The thickness of the barrier layer 11 is preferably 20 to 1000 µm, more preferably 20 to 800 µm, even more preferably 20 to 600 µm, and particularly preferably 20 to 400 µm.

By setting the thickness of the barrier layer 11 to the above-mentioned lower limit value or higher, the gas barrier properties of the multilayer film 1 can be further improved. On the other hand, by setting the thickness of the barrier layer 11 to the above-mentioned upper limit value or lower, the molding processability of the multilayer film 1 can be further improved.

The thickness of the base material layer 13 is preferably in the range of 50 µm or higher and 300 µm or lower, more preferably in the range of 100 µm or higher and 280 µm or lower, and even more preferably in the range of 150 µm or higher and 250 µm or lower.

By setting the thickness of the base material layer 13 to the above-mentioned lower limit value or higher, the moldability of the multilayer film 1 can be further improved. On the other hand, by setting the thickness of the base material layer 13 to the above-mentioned upper limit value or lower, the removability of solid matter such as tablets of the multilayer film 1 can be further improved.

As the resin used for the base material layer 13, one kind of resins used for the barrier layer 11 can be used or two or more kinds thereof can be used in combination. Among these, from the viewpoint of ensuring molding processability, an amorphous resin is preferably included.

The total thickness of the barrier layer 11 and the base material layer 13 is preferably in the range of 180 µm or higher and 320 µm or lower, more preferably in the range of 190 µm or higher and 280 µm or lower, and even more preferably in the range of 200 µm or higher and 250 µm or lower.

In a case where the total thickness of the barrier layer 11 and the base material layer 13 is the above-mentioned upper limit value or lower, the removability of solid matter such as tablets of the multilayer film 1 can be further improved. On the other hand, in a case where the total thickness of the barrier layer 11 and the base material layer 13 is the above-mentioned lower limit value or higher, the gas barrier properties of the multilayer film 1 can be further improved.

### <Outer Layer>

In the multilayer film of the present embodiment, outer layers 12 may be used instead of the base material layer 13. The amorphous resins or the crystalline resins illustrated above can be used as any outer layers 12, and one kind of these resins used singly or two or more thereof can be used in combination. Among these, from the viewpoint of ensuring molding processability, an amorphous resin is preferably included.

The outer layer 12 may be laminated on both sides of the barrier layer 11. In the multilayer film 1, the barrier layer 11 is protected by a pair of these resin layers.

The total thickness of the outer layers 12 is preferably in the range of 5 to 125 µm, more preferably in the range of 10 to 125 µm, and even more preferably in the range of 20 to 125 µm. Thus, excellent flexibility can be imparted to the multilayer film 1.

The total thickness of the barrier layer 11 and the outer layer 12 is preferably in the range of 20 to 750 µm, more preferably in the range of 50 to 600 µm, even more preferably in the range of 100 to 500 µm, and particularly preferably in the range of 200 to 400 µm.

In a case where the total thickness of the barrier layer 11 and the outer layers 12 is the above-mentioned upper limit value or lower, the removability of solid matter such as tablets of the multilayer film 1 can be further improved. On the other hand, in a case where the total thickness of the barrier layer 11 and the outer layers 12 is the above-mentioned lower limit value or higher, the gas barrier properties of the multilayer film 1 can be further improved.

In the multilayer film 1 of the present embodiment, the barrier layer 11 may be formed of one layer (single-layer) or may be formed of two or more layers. In a case where the barrier layer is formed of a plurality of layers, the barrier layer 11 may employ a configuration in which a first film layer 111 containing a first resin, and a second film layer 112 containing a second resin different from the first resin are alternately and repeatedly laminated. By alternately and repeatedly laminating film layers containing different resins, it is possible to further improve the molding processability of the barrier layer.

FIG. 2 is a schematic cross-sectional diagram of the multilayer film 1 in which the barrier layer 11 is formed of two or more layers. As illustrated in FIG. 2, the multilayer film 1 of the present embodiment has a configuration in which the first film layer 111 containing a first resin, and the second film layer 112 containing a second resin different from the first resin are alternately and repeatedly laminated, and the pair of outer layers 12 with the barrier layer 11 interposed therebetween may be further provided.

### <First Film Layer>

The first film layer 111 may be laminated alternately with the second film layer 112 that will be described later, and imparts excellent gas barrier properties and molding processability to the multilayer film 1. The first film layer 111 may be an unstretched film layer and may contain a first resin.

The first film layer 111 may contain only the first resin (that is, may be formed from a first resin), or may contain a first resin and a component other than the first resin (that is, may be formed from a first resin and a component other than the first resin).

The content of the first resin in the first film layer 111 is preferably in the range of 60% to 100% by mass, more preferably in the range of 80% to 100% by mass, and even more preferably in the range of 90% to 100% by mass, with respect to the total mass of the first film layer 111.

As the first resin, an amorphous resin is preferable. By using an amorphous resin as the first resin, the molding processability can be improved. Specific examples of the amorphous resin include cyclic olefin-based resins, olefin-based elastomers, polyvinyl chlorides, polystyrenes, styrene-based elastomers, polymethyl methacrylates, polycarbonates, glycol-modified polyethylene terephthalates, and the like. The first resin can be used singly or two or more thereof can be used in combination.

Among these, the first resin is preferably a cyclic olefin-based resin. Since the cyclic olefin-based resins are excellent in moisture resistance, transparency, and molding processability as compared with other materials, it is possible to impart high molding processability to the multilayer film.

Here, examples of the cyclic olefin-based resins include a homopolymer of various cyclic olefin monomers (cycloolefin polymer (COP)); a copolymer of a cyclic olefin monomer and another monomer (cycloolefin copolymer (COC)) such as ethylene; a hydrogen additive of a homopolymer or a copolymer thereof.

Specific examples of the cyclic olefin monomer include bicyclic cycloolefins such as norbornene, norbornadiene, methylnorbornene, dimethylnorbornene, ethylnorbornene, chlorinated norbornene, chloromethylnorbornene, trimethylsilylnorbornene, phenylnorbornene, cyanonorbornene, dicyanonorbornene, methoxycarbonylnorbornene, pyridylnorbornene, nadic acid anhydride, and nadic acid imide; tricyclic cycloolefins such as dicyclopentadiene, dihydrodicyclopentadiene and alkyl, alkenyl, alkylidene, and an aryl substituent thereof; tetracyclic cycloolefins such as dimethanohexahydronaphthalene, dimethanooctahydronaphthalene and alkyl, alkenyl, alkylidene, and an aryl substituent thereof; five-ring cycloolefins such as tricyclopentadiene; six-ring cycloolefins such as hexacycloheptadecene; and the like. In addition, examples thereof include dinorbornene, a compound in which two norbornene rings are bonded with a hydrocarbon chain or an ester group, and a compound containing a norbornene ring such as an alkyl or aryl substituent thereof.

A polymerization method and polymerization mechanism of monomers of the cyclic olefin-based resins may employ ring-opening polymerization or addition polymerization. In addition, in a case where a plurality of types of monomers are used in combination, a polymerization mode may be random copolymerization or block copolymerization.

The first resin that may be included in the first film layer 111 may be only one kind or may include two or more kinds, and in a case in which two or more kinds are used, the combination and ratio of these can be arbitrarily selected according to the purpose.

The component other than the first resin, which may be included in the first film layer 111, may be a resin component or may be a non-resin component; however, in a case in which the component is a resin component, it is also preferable that the resin component is a resin other than the second resin.

Among the components other than the first resin, examples of the non-resin component include the additives that are known in the art.

The component other than the first resin, which may be included in the first film layer 111, may be only one kind or may include two or more kinds, and in a case in which two or more kinds are used, the combination and ratio of these can be arbitrarily selected according to the purpose.

The lamination number of the first film layers 111 in the barrier layer 11 may be one or more or may be 3 to 100, but is preferably 3 to 5000, and for example, the lamination number may be any of 50 to 5000, 250 to 4500, 300 to 4000, 450 to 3500, 600 to 3000, 750 to 2500, or 750 to 2000.

The number of layers of the first film layer 111 can be checked by, for example, cutting the multilayer film 1 using a microtome, and observing a cross-section of the multilayer film 1 produced by this cutting, using an electron microscope. In addition, from the method of producing a multilayer film that will be described later, it is possible to calculate the number of layers of the first film layer, without observing a cross-section.

The total thickness of the first film layers 111 is preferably 10 to 500 µm, more preferably 10 µm or higher and lower than 400 µm, even more preferably 10 to 300 µm, and particularly preferably 10 to 200 µm.

Here, the "total thickness of the first film layers 111" means the total value of thicknesses of all the first film layers 111 existing in the barrier layer 11.

### <Second Film Layer>

The second film layer 112 may be an unstretched film layer and may include a second resin of a type different from the first resin.

The second film layer 112 may include only the second resin (that is, may also be formed from the second resin), and may include the second resin and a component other than the second resin (that is, may be composed of the second resin and a component other than the second resin).

The content of the second resin in the second film layer 112 is preferably in the range of 60% to 100% by mass, more preferably in the range of 80% to 100% by mass, and even more preferably in the range of 90% to 100% by mass, with respect to the total mass of the second film layer 112.

The second resin may be an amorphous resin or a crystalline resin, but an amorphous resin is preferable. Examples of the amorphous resin include the resins used in the first resin, and specific examples of the crystalline resin include polyolefin-based resins such as polyethylene, polypropylene, and polymethylpentene; polyamide resin such as nylon 6 and nylon 66; polyester-based resins such as polyethylene terephthalate, polybutylene terephthalate, polybutylene succinate, and polyethylene-2,6-naphthalate; polyacetal resins; polylactic acid resins; polyglycolic acid resins; polycaprolactone resins; and copolymer resins containing monomers that form the resins. One kind of these can be used singly, or two or more kinds thereof may be used in combination.

Among these, the second resin is preferably an elastomer. Since the elastomer is softer than other materials, the flexibility of the second film layer 112 is increased. For example, in a case where the multilayer film 1 is molded and the solid accommodation part protruding in a thickness direction thereof is provided, the solid accommodation part can be sufficiently pushed in with a low load, and solid matter such as tablets can be easily removed. In addition, since it is not necessary to use a halogen such as fluorine or chlorine in order to achieve the second film layer 112 having high flexibility, it is advantageous of being environmentally friendly. Examples of the elastomer include styrene-based elastomers.

The second resin that may be included in the second film layer 112 may be only one kind or may include two or more kinds, and in a case in which two or more kinds are used, the combination and ratio of these can be arbitrarily selected according to the purpose.

The component other than the second resin, which may be included in the second film layer 112, may be a resin component or may be a non-resin component; however, in a case in which the component is a resin component, it is also preferable that the resin component is a resin other than the first resin.

Among the components other than the second resin, examples of the non-resin component include the above-mentioned additives as component other than the first resin.

The component other than the second resin, which may be included in the second film layer 112, may be only one kind or may include two or more kinds, and in a case in which two or more kinds are used, the combination and ratio of these can be arbitrarily selected according to the purpose.

The lamination number of the second film layers 112 in the barrier layer 11 may be one or more or may be 2 to 100, but is preferably 2 to 5000, and for example, the lamination number may be any of 50 to 5000, 250 to 4500, 300 to 4000, 450 to 3500, 600 to 3000, 750 to 2500, or 750 to 2000.

The number of layers of the second film layer 112 can be checked by the same method as that used in the case of the number of layers of the first film layer 111 described above.

In the barrier layer 11, the number of layers of the first film layer 111 and the number of layers of the second film layer 112 may be the same, or may be different by 1 (the number of layers of the first film layer 111 may be larger by only one than the number of layers of the second film layer 112, or the number of layers of the second film layer 112 may be larger by only one than the number of layers of the first film layer 111).

For example, the number of layers of the barrier layer 11 is preferably 100 to 10000.

The total thickness of the second film layers 112 is preferably 10 to 500 µm, more preferably 10 µm or higher and lower than 400 µm, even more preferably 10 to 300 µm, and particularly preferably 10 to 200 µm.

Here, the "total thickness of the second film layers 112" means the total value of thicknesses of all the second film layers 112 existing in the barrier layer 11.

The thickness of the barrier layer 11 in a case where the barrier layer 11 has a configuration in which the film layers 111 and the second film layers 112 are laminated alternately with one another, in other words, the sum of the total value of the thicknesses of the first film layers 111 and the total value of the thicknesses of the second film layers 112 is preferably 20 to 1000 µm, more preferably 20 to 800 µm, even more preferably 20 to 600 µm, and particularly preferably 20 to 400 µm.

### <Outer Layer>

The amorphous resins or the crystalline resins illustrated above can be used as any outer layers 12, and one kind of these resins used singly or two or more thereof can be used in combination. Among these, from the viewpoint of ensuring molding processability, an amorphous resin is preferably included.

The outer layer 12 may be laminated on both sides of the barrier layer 11. In the multilayer film 1, the barrier layer 11 is protected by a pair of these resin layers.

The total thickness of the outer layers 12 is preferably in the range of 5 to 125 µm, more preferably in the range of 10 to 125 µm, and even more preferably in the range of 20 to 125 µm. Thus, excellent flexibility can be imparted to the multilayer film 1.

The total thickness of the multilayer film 1 is preferably in the range of 20 to 750 µm, more preferably in the range of 50 to 600 µm, even more preferably in the range of 100 to 500 µm, and particularly preferably in the range of 200 to 400 µm. As the total thickness of the multilayer film 1 is less than or equal to the above-mentioned upper limit value, solid accommodation part of the package can be formed more easily. In addition, as the total thickness of the multilayer film 1 is more than or equal to the above-mentioned lower limit value, it is possible to impart higher barrier properties for the purpose of protecting the contents.

### <Other Layers>

The multilayer film 1 may include another layer in addition to the barrier layer 11, the base material layer 13, and the outer layer 12, to the extent that the effects of the present invention are not impaired. The other layer is not particularly limited and can be arbitrarily selected according to the purpose. For example, as other layers, the other outer layers may be provided on both sides of the outer layer 12.

However, in the multilayer film 1, for example, as illustrated in FIG. 2, it is preferable that the outer layer 12 is provided in direct contact with the barrier layer 11.

### Third Embodiment

Next, properties of a multilayer film of a third embodiment will be described.

The multilayer film of the third embodiment according to the present invention includes the barrier layer in which the first film layer containing the first resin and the second film layer containing the second resin different from the first resin are alternately and repeatedly laminated, in which the first resin is a cyclic olefin-based resin, and the second resin is an elastomer. The multilayer film of the present embodiment has a wide molding temperature range and is excellent in molding processability. Examples of the cyclic olefin-based resin and the elastomer include those mentioned above.

In the multilayer film of the third embodiment, in a case where a molding test is carried out multiple times under a uniform molding pressure and at various molding temperatures, a difference between the molding temperatures that differ from each other is 10°C or higher, in which the molding temperatures enables a drawing ratio of the solid accommodation part to be 0.37 to 0.43, and enables the multilayer film of the solid accommodation part to have a thickness of 20% to 100% with respect to a thickness before the thermal molding, and it is not necessary that a difference between a maximum temperature value and a minimum temperature value of the multilayer film in a case where a storage elastic modulus of the multilayer film is 5.0 × 10⁶ to 5.0 × 10⁷ Pa is 25°C to 140°C. However, since the barrier layer in which the first film layer containing the first resin and the second film layer containing the second resin different from the first resin are alternately and repeatedly laminated, the first resin is a cyclic olefin-based resin, and the second resin is an elastomer, the multilayer film of the third embodiment has the same molding processability and the same molding temperature range as in the multilayer film of the first embodiment and the second embodiment.

The total thickness of the first film layers is preferably 10 to 500 µm, more preferably 10 µm or higher and lower than 400 µm, even more preferably 10 to 300 µm, and particularly preferably 10 to 200 µm.

Here, the "total thickness of the first film layers" means the total value of thicknesses of all the first film layers existing in the barrier layer.

The total thickness of the second film layers is preferably 10 to 500 µm, more preferably 10 µm or higher and lower than 400 µm, even more preferably 10 to 300 µm, and particularly preferably 10 to 200 µm.

Here, the "total thickness of the second film layers" means the total value of thicknesses of all the second film layers existing in the barrier layer.

The multilayer film of the third embodiment may include an outer layer and other layers in the multilayer films of the first embodiment and the second embodiment.

### «Method of Producing Multilayer Film»

A method of producing the multilayer film 1 is not particularly limited, but examples thereof include a feed block method in which a raw material resin or the like is melt-extruded using a number of extruders, a co-extrusion T-die method such as a multi-manifold method, or an air-cooled or water-cooled co-extrusion inflation method, a laminating method, and the like.

As subsequent steps, a dry laminating method in which single-layer sheets or films that form individual layers are bonded using an appropriate adhesive, an extrusion laminating method, a hot melt laminating method, a wet laminating method, a thermal (heat) laminating method, and the like are used, and those methods are used in combination. In addition, the lamination may be performed by a coating method.

In a case where the multilayer film is a multilayer film including the barrier layer in which the first film layer and the second film layer are alternately and repeatedly laminated, first, a first laminated film having a multilayer structure for forming the final structure in which the first film layer 111 and the second film layer 112 are laminated is produced. The first laminated film is configured such that, more specifically, a first resin-containing layer that is finally formed as the first film layer 111, and a second resin-containing layer that is finally formed as the second film layer 112 are laminated alternately and repeatedly. As the first laminated film, for example, a laminated film having a multilayer structure in which the two outermost layers are both a first resin-containing layer, and the number of layers of the second resin-containing layer is only 1 smaller than the number of layers of the first resin-containing layer; or conversely, a laminated film having a multilayer structure in which the two outermost layers are both a second resin-containing layer, and the number of layers of the first resin-containing layer is only 1 smaller than the number of layers of the second resin-containing layer, may be mentioned. However, the first laminated film is not limited to these.

Next, this first laminated film is cut in a direction perpendicular to the surface of the film, and then two sheets of the first laminated film thus obtained are further laminated in the thickness direction of these to produce a second laminated film.

Next, this second laminated film is expanded by stretching in a direction parallel to the surface of the film, and then this second laminated film after expansion is cut and laminated in the same manner as in the case of the first laminated film to produce a third laminated film.

Thereafter, expansion, cutting, and lamination of such a laminated film are carried out repeatedly. Thus, a barrier layer 11 is produced. For example, in a case in which a laminated film in which the two outermost layers are both a first resin-containing layer is used as the first laminated film, the first resin-containing layer of the two outermost layers thus superposed at the time of producing the second laminated film by laminating the first laminated films, apparently forms one first resin-containing layer in the second laminated film. This also applies similarly during the production of laminated films after the second laminated film and the barrier layer 11. However, the barrier layer 11 illustrated here is only an example of the multilayer film 1 of the present invention.

The first laminated film can be produced by, for example, a feed block method in which a raw material resin or the like is melt-extruded using a number of extruders; a co-extrusion T-die method such as a multi-manifold method; or an air-cooled or water-cooled co-extrusion inflation method.

In the producing method described above, the subsequent production from this first laminated film to the barrier layer of interest can be performed using a multiplier.

Next, for example, the constituent components of the outer layers 12, such as the first resin, are melted, the resin in a molten state is melt-extruded into separate feed blocks using a number of extruders different from the above-described extruders, and a film is formed. The film thus formed is used as the outer layers 12.

Next, the outer layers 12 are laminated on both sides of the barrier layer 11 described above.

Next, the laminated film is cooled and solidified using a cooling roll to produce the multilayer film 1.

The multilayer film 1 produced according to the present embodiment has excellent molding processability since the film is not stretched.

### «Package»

The package of the present invention includes the multilayer film of the present invention described above.

Since the package of the present invention is formed by using the multilayer film of the present invention having excellent molding processability, the package can be easily produced.

In addition, as described above, this multilayer film has a wide molding temperature range and can be easily molded. Since the package of the present invention is formed by using such a multilayer film, continuous stable production is possible. Therefore, it is easy to support deep drawing, and it is possible to manufacture packages for various purposes.

The package of the present invention is suitable for use in various applications, for example, a packaging bag or a packaging container for packaging food, pharmaceutical products, and the like.

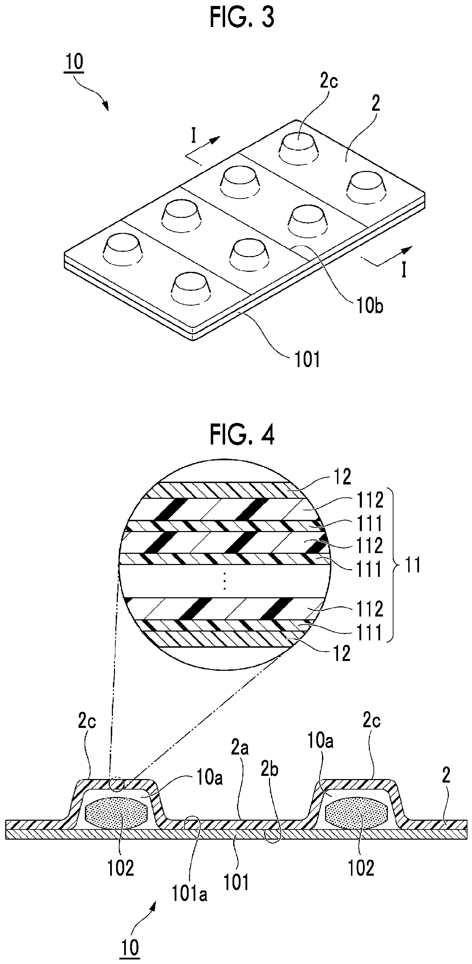

FIG. 3 is a perspective diagram schematically illustrating an embodiment of the package of the present invention, and FIG. 4 is a cross-sectional diagram taken along line I-I of the package shown in FIG. 3, and a cross-sectional diagram of the package formed by using the multilayer film illustrated in FIG. 2.

In FIG. 3 and subsequent figures, the same constituent elements as those illustrated in a diagram that has already been explained will be assigned with the same reference symbols as those used in the diagram that has been explained, and further detailed description thereof will not be repeated.

The package 10 illustrated herein is configured to include a molded film 2 and a cover film 101. In the molded film 2, a protrusion 2c constituting an accommodation part 10a of the package 10 is formed. The molded film 2 is a molded article of the above-mentioned multilayer film (for example, the multilayer film 1 illustrated in FIG. 1 or FIG. 2).

The package 10 is a PTP film (packaging container) as a blister pack, and tablets 102 can be sealed and accommodated in the accommodation part 10a.

One surface (in the present specification, may be referred to as a "second surface") 2b of the molded film 2 is adhered to one surface (in the present specification, may be referred to as a "first surface") 101a of the cover film 101. However, the molded film 2 protrudes, in some region, toward the surface of the other side (in the present specification, may be referred to as a "first surface") 2a, and the second surface 2b in this protrusion 2c is not adhered to the first surface 101a of the cover film 101, while the accommodation part 10a is formed by the second surface 2b of the molded film 2 and the first surface 101a of the cover film 101.

As the material for the cover film 101, for example, aluminum may be mentioned.

A slit 10b is formed in the molded film 2 and the cover film 101. The slit 10b is an optional configuration and may not be necessarily formed; however, as a slit 10b is formed, since the package 10 can be easily partitioned to the particular number of accommodations of tablets 102 in the accommodation part 10a, convenient usability of the package 10 is improved.

Here, as the package 10, it is illustrated that the external shape of the accommodation part 10a is a truncated conical shape; however, the external shape of the accommodation part 10a is not limited to this and can be arbitrarily selected according to the shape of the tablet 102, which is an object of accommodation. For example, the external shape of the accommodation part 10a may be a polygonal shape such as a triangle, a rectangle, a pentagon, or a hexagon in a case in which the package 10 is viewed in a planar view so as to look down from the molded film 2 side, or may be an elliptical shape or the like.

In addition, it is illustrated here that the package 10 includes eight accommodation parts 10a; however, the number of the accommodation parts 10a is not limited to this and may be one, or two or more (provided that the case of eight is excluded).

### «Method of manufacturing Package»

The package of the present invention can be manufactured using the multilayer film by bonding multilayer films with each other, or bonding a multilayer film with another film or the like, so as to form the accommodation parts of interest.

For example, the package 10 illustrated in FIGS. 3 and 4 can be produced using a known PTP packaging machine. More specifically, first, a molded film 2 is produced by forming protrusions in the multilayer film 1 by vacuum molding, pressure forming, plug molding, or the like.

Next, after the protrusions 2c of the molded film 2 are filled with tablets 102, which are objects to be stored, the cover film 101 is superposed with the multilayer film 1, and the molded film 2 is adhered to the cover film 101.

Next, if necessary, slits 10b are formed in the molded film 2 and the cover film 101, using a machine blade, a half-cut blade, or the like.

Thus, the package 10 is obtained.

### EXAMPLES

Hereinafter, the present invention will be described in more detail by way of specific Examples. However, the present invention is not intended to be limited to the following Examples.

### <Production of multilayer film>

### [Example 1]

As the first resin, a cyclic olefin-based resin ("ZEONEX 5000" manufactured by Nippon Zeon Co., Ltd., referred to as COP in some cases) was prepared, and as the second resin, a styrene-based elastomer ("SIBSTAR (registered trademark)" manufactured by KANEKA CORPORATION, a styrene-isobutylene-styrene block copolymer, referred to as SIBS in some cases) was prepared, respectively. Using an extruder (manufactured by Sun NT Co., Ltd., "Model No. SNT40-28"), the first resin and the second resin were respectively brought into a molten state at 250°C, and using feed blocks, a molten laminate of five layers (above-mentioned first laminated film), having a configuration in which a high-density polyethylene layer that would finally become an unstretched first film layer, and a styrene-based elastomer layer that would finally become an unstretched second film layer were alternately and repeatedly laminated, in which two outermost layers were both a cyclic olefin-based resin, and the laminate further included three layers of the cyclic olefin-based resin and two layers of the styrene-based elastomer layer, was produced.

Next, the five-layered molten laminate thus obtained was cut into two sheets using a multiplier, these two sheets of molten laminate after cutting were further laminated. Thereby, a molten laminate of nine layers (above-mentioned second laminated film) was produced.

Next, the nine-layered molten laminate thus obtained was expanded by stretching in a direction parallel to the surface of the laminate, subsequently this nine-layered molten laminate after expansion was cut and laminated by the same method as that in the case of the five-layered molten laminate (first laminated film). Thereby, a molten laminate of 17 layers (above-mentioned third laminated film) was produced.

Thereafter, expansion, cutting and lamination of the molten laminate were repeatedly performed by a similar procedure. Thus, a barrier layer of 2049 layers having a configuration in which an unstretched first film layer and an unstretched second film layer were alternately and repeatedly laminated, the barrier layer being composed of 1025 layers of the first film layer and 1024 layers of the second film layer, was produced.

Next, polypropylene ("E122V" manufactured by Prime Polymer Co., Ltd.) was melted, the resin in a molten state was melt-extruded into separate feed blocks using a number of extruders different from those described above, and a film containing polypropylene (outer layer) was formed.

Next, a molten laminate of 2051 layers was produced by laminating the outer layers obtained as described above on both sides of the barrier layer of 2049 layers. Furthermore, a multilayer film of Example 1 having the structure illustrated in FIG. 2 was produced by co-extruding this molten laminate using a die.

The thickness of the multilayer film thus obtained was 300 µm, and within that, the thickness of the outer layer of 1 layer was 30 µm, and the thickness of the barrier layer was 240 µm. That is, the number of layers of the first film layer was 1025, the average thickness per layer of the first film layer was 0.14 µm, and the total thickness is 140.0 µm. In addition, the number of layers of the second film layer was 1024, the average thickness per layer of the second film layer was 0.10 µm, and the total thickness is 100.0 µm.

### [Example 2]

As the second resin, a multilayer film of Example 2 was produced in the same manner as in Example 1, except that the styrene-based elastomer ("Tough Tech (registered trademark) H1221" manufactured by Asahi Kasei Corporation., referred to as SEBS in some cases) was used instead of the styrene-based elastomer ("SIBSTAR (registered trademark)" manufactured by KANEKA CORPORATION, a styrene-isobutylene-styrene block copolymer, referred to as SIBS in some cases).

The thickness of the multilayer film thus obtained was 300 µm, and within that, the thickness of the outer layer of 1 layer was 30 µm, and the thickness of the barrier layer was 240 µm. That is, the number of layers of the first film layer was 1025, the average thickness per layer of the first film layer was 0.14 µm, and the total thickness is 140.0 µm. In addition, the number of layers of the second film layer was 1024, the average thickness per layer of the second film layer was 0.10 µm, and the total thickness is 100.0 µm.

### [Example 3]

As the first resin, a cyclic olefin-based resin ("ZEONEX 5000" manufactured by Nippon Zeon Co., Ltd., referred to as COP in some cases) was prepared, and as the second resin, a styrene-based elastomer ("SIBSTAR (registered trademark)" manufactured by KANEKA CORPORATION, a styrene-isobutylene-styrene block copolymer, referred to as SIBS in some cases) was prepared, respectively. Using an extruder (manufactured by Sun NT Co., Ltd., "Model No. SNT40-28"), the first resin and the second resin were respectively brought into a molten state at 250°C, and using feed blocks, a barrier layer of five layers, having a configuration in which a high-density polyethylene layer that would finally become an unstretched first film layer, and a styrene-based elastomer layer that would finally become an unstretched second film layer were alternately and repeatedly laminated, in which two outermost layers were both a cyclic olefin-based resin layer, and the laminate further included three layers of the cyclic olefin-based resin layer and two layers of the styrene-based elastomer layer, was produced.

Next, the olefin-based elastomer (manufactured by Mitsui Chemicals, Inc. "NOTIO SN-0285"), and the same first resin as that used for producing the barrier layer were subjected to dry blending or melt kneading, the resin in a molten state was melt-extruded into separate feed blocks using a number of extruders different from those described above, and a film (outer layer) containing an olefin-based elastomer and polypropylene was formed.

Next, a molten laminate of 7 layers was produced by laminating the outer layers obtained as described above on both sides of the barrier layer of 5 layers. Furthermore, a multilayer film of Example 3 having the structure illustrated in FIG. 2 was produced by co-extruding this molten laminate using a die.

The thickness of the multilayer film thus obtained was 300 µm, and within that, the thickness of the outer layer of 1 layer was 30 µm, and the thickness of the barrier layer was 240 µm. That is, the number of layers of the first film layer was 3, the average thickness per layer of the first film layer was 48 µm, and the total thickness is 144 µm. In addition, the number of layers of the second film layer was 2, the average thickness per layer of the second film layer was 48 µm, and the total thickness is 96.0 µm.

### [Example 4]

As the resin used for the barrier layer, polypropylene resin (PP resin) ("E122V" manufactured by Prime Polymer Co., Ltd.), a plant-derived high-density polyethylene resin (HDPE resin) ("SGM9450F" manufactured by Braskem), a plant-derived low-density polyethylene resin (LDPE resin) ("SEB853" manufactured by Braskem), and a petroleum resin ("T-REZ OP501" manufactured by Tonen Chemical Corporation.) were prepared. Next, a barrier layer was produced by dry blending or melt kneading the PP resin/HDPE/LDPE/petroleum resin to be 20/40/25/15, and performing extrusion molding.

Next, the resin in a molten state was melt-extruded into separate feed blocks using a number of extruders different from those described above, and a film containing polypropylene (outer layer) was formed.

Next, a molten laminate of 3 layers was produced by laminating the outer layers obtained as described above on both sides of the barrier layer. Furthermore, a multilayer film of Example 4 was produced by co-extruding this molten laminate using a die.

The thickness of the multilayer film thus obtained was 300 µm, and within that, the thickness of the outer layer of 1 layer was 15 µm, and the thickness of the barrier layer was 270 µm.

### [Example 5]

As the resin used for the barrier layer, a plant-derived high-density polyethylene resin (HDPE resin) ("SGM9450F" manufactured by Braskem) and a cyclic olefin-based resin ("ZEONEX 5000" manufactured by Nippon Zeon Co., Ltd., referred to as COP in some cases) were prepared. Next, a barrier layer was produced by dry blending or melt kneading HDPE/COP to be 75/25, and performing extrusion molding.

Next, a polypropylene resin (PP resin) ("E122V" manufactured by Prime Polymer Co., Ltd.) was melted, the resin in a molten state was melt-extruded into separate feed blocks using a number of extruders different from those described above, and a film (outer layer) made of the polypropylene resin was formed.

Next, a molten laminate of 3 layers was produced by laminating the outer layers obtained as described above on both sides of the barrier layer. Furthermore, a multilayer film of Example 5 was produced by co-extruding this molten laminate using a die.

The thickness of the multilayer film thus obtained was 300 µm, and within that, the thickness of the outer layer of 1 layer was 20 µm, and the thickness of the barrier layer was 260 µm.

### [Example 6]

As a resin film used for the barrier layer, a polychlorotrifluoroethylene film ("Aclar SupRx 900" manufactured by Honeywell International Inc.) was prepared.

In addition, as a resin film used for the base material layer, a polyvinyl chloride film ("VSS-F120" manufactured by Sumitomo Bakelite Co., Ltd.) was prepared.

Next, the barrier layer and the base material layer were dry-laminated in this order to produce a multilayer film of Example 6.

The thickness of the multilayer film thus obtained was 223 µm, and within that, the thickness of the barrier layer was 23 µm, and the thickness of the base material layer was 200 µm.

### [Example 7]

As a resin film used for the barrier layer, a polychlorotrifluoroethylene film ("Aclar UltRx 2000" manufactured by Honeywell International Inc.) was prepared.

In addition, as a resin film used for the base material layer, a polyvinyl chloride film ("VSS-F120" manufactured by Sumitomo Bakelite Co., Ltd.) was prepared.

A multilayer film of Example 7 was produced in the same manner as in Example 6, except that the thickness of the barrier layer was 51 µm, the thickness of the base material layer was 250 µm, and the thickness of the multilayer film was 301 µm.

### [Comparative Example 1]

A multilayer film of Comparative Example 1 was produced in the same manner as in Example 1, except that as the first resin, high-density polyethylene ("3300F" manufactured by Prime Polymer Co., Ltd., referred to as HDPE in some cases) was used instead of the cyclic olefin-based resin ("ZEONEX 5000" manufactured by Nippon Zeon Co., Ltd.), and as the second resin, polypropylene ("E122V" manufactured by Prime Polymer Co., Ltd., referred to as PP in some cases) was used instead of the styrene-based elastomer ("SIBSTAR (registered trademark)" manufactured by KANEKA CORPORATION, a styrene-isobutylene-styrene block copolymer, referred to as SIBS in some cases).

The thickness of the multilayer film thus obtained was 300 µm, and within that, the thickness of the outer layer of 1 layer was 30 µm, and the thickness of the barrier layer was 240 µm. That is, the number of layers of the first film layer was 1025, the average thickness per layer of the first film layer was 0.14 µm, and the total thickness is 140.0 µm. In addition, the number of layers of the second film layer was 1024, the average thickness per layer of the second film layer was 0.10 µm, and the total thickness is 100.0 µm.

### [Comparative Example 2]

A multilayer film of Comparative Example 2 was produced in the same manner as in Example 1, except that high-density polyethylene ("3300F", manufactured by Prime Polymer Co., Ltd., referred to as HDPE in some cases) was used instead of the cyclic olefin-based resin ("ZEONEX 5000" manufactured by Nippon Zeon Co., Ltd.) as the first resin.

The thickness of the multilayer film thus obtained was 300 µm, and within that, the thickness of the outer layer of 1 layer was 30 µm, and the thickness of the barrier layer was 240 µm. That is, the number of layers of the first film layer was 1025, the average thickness per layer of the first film layer was 0.14 µm, and the total thickness is 140.0 µm. In addition, the number of layers of the second film layer was 1024, the average thickness per layer of the second film layer was 0.10 µm, and the total thickness is 100.0 µm.

### [Comparative Example 3]

A multilayer film of Comparative Example 3 was produced in the same manner as in Example 3, except that as the first resin, high-density polyethylene ("3300F" manufactured by Prime Polymer Co., Ltd., referred to as HDPE in some cases) was used instead of the cyclic olefin-based resin ("ZEONEX 5000" manufactured by Nippon Zeon Co., Ltd.), and as the second resin, polypropylene ("E122V" manufactured by Prime Polymer Co., Ltd., referred to as PP in some cases) was used instead of the styrene-based elastomer ("SIBSTAR (registered trademark)" manufactured by KANEKA CORPORATION, a styrene-isobutylene-styrene block copolymer, referred to as SIBS in some cases).

The thickness of the multilayer film thus obtained was 300 µm, and within that, the thickness of the outer layer of 1 layer was 30 µm, and the thickness of the barrier layer was 240 µm. That is, the number of layers of the first film layer was 3, the average thickness per layer of the first film layer was 48 µm, and the total thickness is 144.0 µm. In addition, the number of layers of the second film layer was 2, the average thickness per layer of the second film layer was 48 µm, and the total thickness is 96.0 µm.

### <Production of Single-layer Film>

### [Comparative Example 4]

Polypropylene ("E122V" manufactured by Prime Polymer Co., Ltd.; referred to as PP in some cases) was extrusion molded. Thereby, an unstretched single-layer film formed from polypropylene having a single-layer structure was produced.

The thickness of the single-layer film thus obtained was 300 µm.

### <Evaluation of Multilayer Film and Single-layer Film>

For the multilayer films and single-layer films obtained as described above, evaluation of the following items was carried out by the following methods. The results are illustrated in Table 1.

### (Moisture Permeability of Sheet)

The moisture permeability of the sheet was evaluated by measuring the amount of water vapor permeation of the multilayer film or single-layer film produced in each of Examples and Comparative Examples. The amount of water vapor permeation was measured with PERMATRAN-W (registered trademark) 3/33 manufactured by MOCON, Inc. according to a method described in JIS K7129 (method B) (moisture absorption condition: 40°C/90% RH).

### (Storage Elastic Modulus)

The storage elastic modulus of the multilayer film or single-layer film produced in each of Examples and Comparative Examples was measured. The storage elastic modulus was measured with DMS6100 manufactured by Hitachi High-Tech Science Corporation at a tension measurement mode, a measurement frequency of 10 Hz, and a temperature increasing rate of 5°C/min. As a sample, a test piece having a width of 4 mm was prepared, and the measurement was performed at a distance between chucks of 20 mm. The results are illustrated in Table 1.

### (Molding Temperature Range in Case of Drawing Ratio of 0.4)

A test sheet including the multilayer film or single-layer film produced in each of Examples and each of Comparative Examples was produced. Specifically, first, a roll-shaped multilayer film having a width of 103 mm was produced. A blister packaging machine ("FBP-300E" manufactured by CKD) was used to form two rows of five tablet accommodation parts per row, which protrudes in the thickness direction, on the multilayer film. Then, the multilayer film was punched into a rectangle having a planar shape of 37 mm × 94 mm to produce a test sheet. The tablet accommodation parts were recesses each of which has an inner diameter of 10.0 mm and a depth of 4.0 mm, and had a drawing ratio of 0.4.

A thickness of 60 µm or higher (thinnest layer) of a pocket formed by this film (a ratio of the thickness of the tablet accommodation part in the multilayer film or single-layer film after molding to the thickness before molding was 20% or more), the pocket without whitening (a phenomenon in which a side of the pocket is forcibly stretched and partially whitened), and a depth of 3.7 mm to 4.3 mm (drawing ratio of 0.37 to 0.43) of the pocket were used as criteria for determining whether or not molding was possible. A difference between the molding temperatures that differ from each other and satisfy these conditions, was defined as the molding temperature range. The results are illustrated in Table 1.

### (Molding Temperature Range in Case of Drawing Ratio of 0.5)

A test sheet including the multilayer film or single-layer film produced in each of Examples and each of Comparative Examples was produced. Specifically, first, a roll-shaped multilayer film having a width of 103 mm was produced. A blister packaging machine ("FBP-300E" manufactured by CKD) was used to form two rows of five tablet accommodation parts per row, which protrudes in the thickness direction, on the multilayer film. Then, the multilayer film was punched into a rectangle having a planar shape of 37 mm × 94 mm to produce a test sheet. The tablet accommodation parts were recesses each of which has an inner diameter of 10.0 mm and a depth of 5.0 mm, and had a drawing ratio of 0.5.

A thickness of 60 µm or higher (thinnest layer) of a pocket formed by this film (a ratio of the thickness of the tablet accommodation part in the multilayer film or single-layer film after molding to the thickness before molding was 20% or more), the pocket without whitening (a phenomenon in which a side of the pocket is forcibly stretched and partially whitened), and a depth of 4.7 mm to 5.3 mm (drawing ratio of 0.47 to 0.53) of the pocket were used as criteria for determining whether or not molding was possible. A difference between the molding temperatures that differ from each other and satisfy these conditions, was defined as the molding temperature range. The results are illustrated in Table 1.

### (Temperature Range of Storage Elastic Modulus of 5 to 50 MPa)

The storage elastic modulus of the multilayer film or single-layer film produced in each of Examples and Comparative Examples was measured, and the temperature range in which the storage elastic modulus was 5 to 50 MPa was determined from the measurement data. The storage elastic modulus was measured with DMS6100 manufactured by Hitachi High-Tech Science Corporation at a tension measurement mode, a measurement frequency of 10 Hz, and a temperature increasing rate of 5°C/min. The results are illustrated in Table 1.

### (Temperature Range of Storage Elastic Modulus of 15 to 35 MPa)

The storage elastic modulus of the multilayer film or single-layer film produced in each of Examples and Comparative Examples was measured, and the temperature range in which the storage elastic modulus was 15 to 35 MPa was determined from the measurement data. The storage elastic modulus was measured with DMS6100 manufactured by Hitachi High-Tech Science Corporation at a tension measurement mode, a measurement frequency of 10 Hz, and a temperature increasing rate of 5°C/min. The results are illustrated in Table 1.

### (Correlation Between Storage Elastic Modulus and Molding Temperature Range)

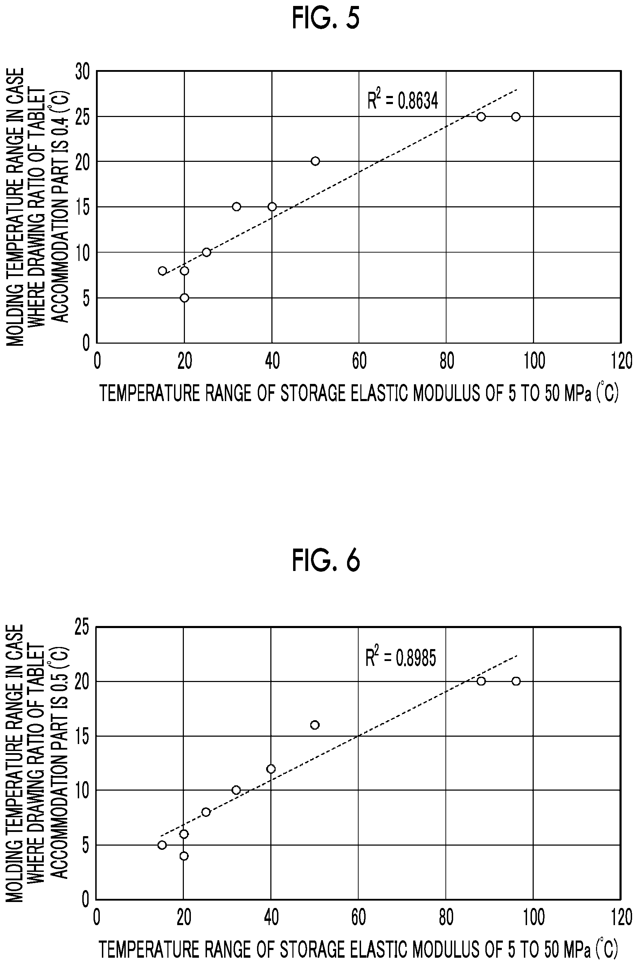

FIG. 5 illustrates the correlation between the molding temperature range in a case where the drawing ratio is 0.4 and the temperature range in which the storage elastic modulus is 5 to 50 MPa of the multilayer film or single-layer film produced in each of Examples and Comparative Examples.

In addition, FIG. 6 illustrates the correlation between the molding temperature range in a case where the drawing ratio is 0.5 and the temperature range in which the storage elastic modulus is 5 to 50 MPa of the multilayer film or single-layer film produced in each of Examples and Comparative Examples.

**[Table 1]**

| | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|
| Barrier layer (first resin/second resin) | COP/SIBS | COP/SEBS | COP/SIBS | PP + HDPE + LDPE | HDPE + COP | PCTFE | PCTFE | HDPE/PP | HDPE/SIBS | HDPE/PP | PP |
| Base material layer | - | - | - | - | - | PVC | PVC | - | - | - | - |
| Outer layer | PP | PP | PP | PP | PP | - | - | PP | PP | PP | - |
| Number of layers of barrier layer | 2049 | 2049 | 5 | 1 | 1 | 1 | 1 | 2049 | 2049 | 3 | 1 |
| Number of layers of film layer | 2051 | 2051 | 7 | 3 | 3 | 2 | 2 | 2051 | 2051 | 5 | 1 |
| Thickness of film (µm) | 300 | 300 | 300 | 300 | 300 | 223 | 301 | 300 | 300 | 300 | 300 |
| Moisture permeability of sheet (g/m²·day) | 0.3 | 0.7 | 0.3 | 0.46 | 0.4 | 0.28 | 0.12 | 0.3 | 0.2 | 0.4 | 0.8 |
| Change ratio of thickness in tablet accommodation part before and after molding (%) 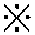 1 | 30 to 80 | 30 to 80 | 30 to 80 | 30 to 80 | 30 to 80 | 30 to 80 | 30 to 80 | 30 to 80 | 30 to 80 | 30 to 80 | 30 to 80 |
| Molding temperature range in case where drawing ratio of tablet accommodation part is 0.4 (°C) | 20 | 20 | 15 | 15 | 10 | 25 | 25 | 8 | 8 | 5 | 5 |
| Molding temperature range in case where drawing ratio of tablet accommodation part is 0.5 (°C) | 16 | 16 | 12 | 10 | 8 | 20 | 20 | 5 | 6 | 4 | 6 |
| Temperature range of storage elastic modulus of 5 to 50 Mpa (°C) | 50 | 50 | 40 | 32 | 25 | 96 | 88 | 15 | 20 | 20 | 20 |
| Temperature range of storage elastic modulus of 15 to 35 Mpa (°C) | 12 | 12 | 11 | 15 | 12 | 30 | 50 | 6 | 8 | 8 | 8 |

| | | | | | | | | | | | |
|---|---|---|---|---|---|---|---|---|---|---|---|
| 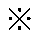 1: Change ratio of thickness of multilayer film or single-layer film in tablet accommodation part after molding to thickness before molding | | | | | | | | | | | |

The multilayer film of each of Examples 1 to 7 had a molding temperature range of 10°C or higher in the case where the drawing ratio is 0.4, and a molding temperature range of 8°C or higher in the case where the drawing ratio is 0.5, and the temperature range in which the storage elastic modulus is 5 to 50 MPa (5.0 × 10⁶ to 5.0 × 10⁷ Pa) was 25°C or higher, and the temperature range in which the storage elastic modulus is 15 to 35 MPa (1.5 × 10⁷ to 3.5 × 10⁷ Pa) was 10°C or higher, and good molding processability was exhibited.

On the other hand, the multilayer film or single-layer film of each of Comparative Examples 1 to 4 had a molding temperature range of less than 10°C in the case where the drawing ratio is 0.4, and a molding temperature range of less than 8°C in the case where the drawing ratio is 0.5, and the temperature range in which the storage elastic modulus is 5 to 50 MPa was less than 25°C, and the temperature range in which the storage elastic modulus is 15 to 35 MPa was less than 10°C, and the molding processability deteriorates.

As illustrated in FIG. 5, the correlation coefficient between the molding temperature range in a case where the drawing ratio is 0.4 and the temperature range in which the storage elastic modulus is 5 to 50 MPa was 0.8634, and according to this result, a good correlation was recognized.

In addition, as illustrated in FIG. 6, the correlation coefficient between the molding temperature range in a case where the drawing ratio is 0.5 and the temperature range in which the storage elastic modulus is 5 to 50 MPa was 0.8985, and according to this result, a good correlation was recognized.

### Industrial Applicability

The present invention can be utilized in packages used at the time of storage of food, pharmaceutical products, and the like.

### Reference Signs List

1 multilayer film
2 molded film
2a first surface of molded film
2b second surface of molded film
2c protrusion of molded film
11 barrier layer
111 first film layer
112 second film layer
12 outer layer
13 base material layer
10 package
10a accommodation part of package
10b slit of package
101 cover film
101a first surface of cover film
102 tablet

## Claims

1. A multilayer film,
wherein in a case where a molding test for forming, by thermal molding, a solid accommodation part having a recessed shape that opens on one surface of the multilayer film and protrudes on the other surface is carried out multiple times with respect to the multilayer film under a uniform molding pressure and at various molding temperatures, a difference between the molding temperatures that differ from each other is 10°C or higher, in which the molding temperatures enables a ratio of a depth to an inner diameter of the solid accommodation part to be 0.37 to 0.43, and enables the multilayer film of the solid accommodation part to have a thickness of 20% to 100% with respect to a thickness before the thermal molding, and
a difference between a maximum temperature value and a minimum temperature value of the multilayer film in a case where a storage elastic modulus of the multilayer film is 5.0 × 10⁶ to 5.0 × 10⁷ Pa is 25°C to 140°C.

2. A multilayer film, wherein a difference between a maximum temperature value and a minimum temperature value of the multilayer film in a case where a storage elastic modulus of the multilayer film is 1.5 × 10⁷ to 3.5 × 10⁷ Pa is 10°C to 80°C.

3. The multilayer film according to claim 1, wherein in a case where the molding test is carried out multiple times with respect to the multilayer film under a uniform molding pressure and at various molding temperatures, a difference between the molding temperatures that differ from each other is 8°C or higher, in which the molding temperatures enables a ratio of a depth to an inner diameter of the solid accommodation part to be 0.47 to 0.53, and enables the multilayer film of the solid accommodation part to have a thickness of 20% to 100% with respect to a thickness before the thermal molding.

4. The multilayer film according to any one of claims 1 to 3, wherein the multilayer film includes a base material layer or an outer layer, and a barrier layer.

5. The multilayer film according to claim 4, wherein the barrier layer contains an amorphous resin or a low-density polyethylene resin.

6. The multilayer film according to claim 4 or 5, wherein the base material layer or the outer layer contains an amorphous resin.

7. The multilayer film according to any one of claims 4 to 6, wherein the barrier layer contains a plant-derived crystalline resin or a plant-derived amorphous resin.

8. The multilayer film according to any one of claims 1 to 3, wherein the multilayer film includes a barrier layer in which a first film layer containing a first resin, and a second film layer containing a second resin different from the first resin are alternately and repeatedly laminated.

9. The multilayer film according to claim 8, wherein a total thickness of the first film layer is 10 to 500 µm, and a total thickness of the second film layer is 10 to 500 µm.

10. The multilayer film according to claim 8 or 9, wherein a lamination number of the first film layer in the barrier layer is in a range of 50 to 5000.

11. The multilayer film according to any one of claims 8 to 10, wherein the first resin is a cyclic olefin-based resin, and the second resin is an elastomer.

12. The multilayer film according to claim 11, wherein the elastomer is a styrene-based elastomer.

13. The multilayer film according to any one of claims 8 to 12, wherein the multilayer film further includes a pair of outer layers with the barrier layer interposed therebetween.

14. A multilayer film, comprising:
a barrier layer in which a first film layer containing a first resin and a second film layer containing a second resin different from the first resin are alternately and repeatedly laminated,
wherein the first resin is a cyclic olefin-based resin, and
the second resin is an elastomer.

15. The multilayer film according to claim 14,
wherein a total thickness of the first film layer is 10 to 500 µm, and
a total thickness of the second film layer is 10 to 500 µm.

16. A package comprising the multilayer film according to any one of claims 1 to 15.
